# EUROPEAN PATENT SPECIFICATION

(11) **EP 1 869 308 B1**
(45) Date of publication and mention of the grant of the patent: **06.08.2014**
(21) Application number: 06737363.9
(22) Date of filing: 08.03.2006
(51) Int. Cl.: F02M 25/07

(54) **EGR VALVE HAVING REST POSITION**
Abgasrückführventil mit Ruhelage
SOUPAPE RGE PRESENTANT UNE POSITION DE REPOS

(30) Priority: 08.03.2005 US 659478 P
(43) Date of publication of application: 26.12.2007
(73) Proprietor: BorgWarner, Inc., Auburn Hills, MI 48326-2872 (US)
(72) Inventor: WILSON, Joseph, A., Oxford, MI 48371 (US); HALSIG, Michael, J., Warren, Michigan 48092 (US); DUDDLES, John, W., Clarkston, Michigan 48348 (US); PRINGLE, Hal, E., Bloomfield, Michigan 48302 (US)
(74) Representative: Lerwill, John
(86) International application number: PCT/US2006/008184
(87) International publication number: WO 2006/096750

(56) References cited:
- EP-A- 1 201 907
- EP-A- 1 420 158
- DE-A1- 19 825 583
- US-A1- 2004 069 285
- US-A1- 2004 103 888

## Description

### FIELD OF THE INVENTION

The present invention relates to an arrangement for maintaining an EGR valve in the open position for an amount of time after the engine has stopped.

### BACKGROUND OF THE INVENTION

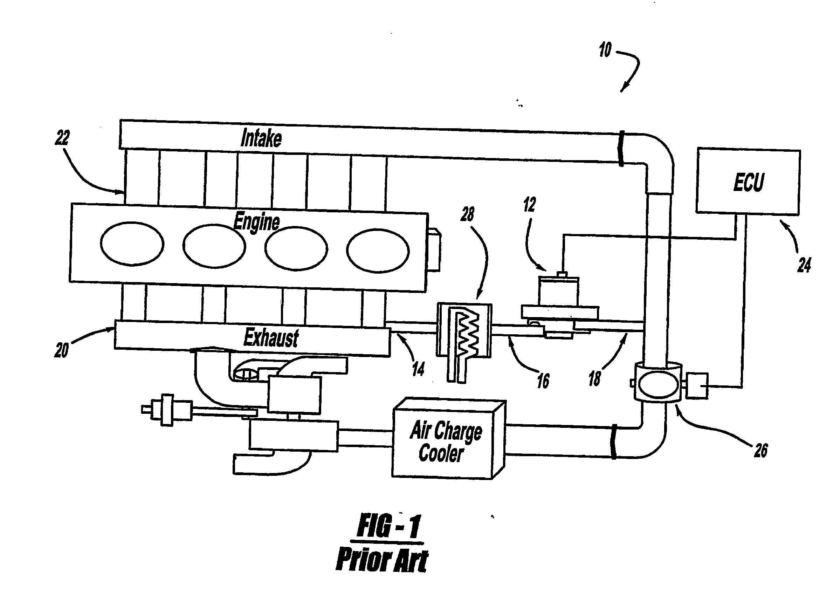

Federal and State legislation require control of vehicle exhaust emissions. Oxides of Nitrogen (NOx) are one of the exhaust gas emissions that must be controlled. The higher the combustion temperature, the greater amount of NOx is produced. A system, referred to as the exhaust gas recirculation (EGR) system, has been developed to reduce combustion temperatures which thus reduces the amount of NOx emissions from the vehicle. A schematic of this system is shown in Figure 1. In the EGR system, a portion of the exhaust gas from the engine's exhaust manifold is recirculated back to the intake manifold where the exhaust gas is combined with incoming fresh air. The mixture of exhaust gas and fresh air are then compressed and ignited in the cylinder. This results in a lower combustion temperature and a reduction in NOx that is emitted from a vehicle's exhaust system.

Referring to Figure 1, an EGR system 10 comprises of an EGR valve 12 that controls the flow of exhaust gas to the intake manifold. Space Conduits 14, 16, 18 provide the interconnection between an exhaust manifold 20, the EGR valve 12, and an intake manifold 22. The system shown uses an electrically controlled EGR valve 12. Thus, an engine control unit (ECU) 24 provides a signal that controls the open and closing of the EGR valve. As the EGR valve 12 opens and closes, the flow rate of exhaust gas to the intake manifold increases and decreases respectfully. It is also typical to have a throttle valve 26 to control airflow into the intake manifold and an exhaust gas cooler 28 to reduce temperature of recirculated exhaust gas prior to being mixed with the fresh air.

The required EGR valve 12 flow rate of recirculating exhaust gas is dependent upon several factors that include, but are not limited to, the displacement of the engine, and the pressure differential between the exhaust system and the intake system. Operating force of the EGR system is also a factor used in the selection criteria for the type of actuator used for the EGR valve. Higher flow rates require larger valves with greater area and higher operating forces. Lower pressure differential between the exhaust and intake manifold requires larger valves to achieve the desired flow rate. Furthermore, debris in the exhaust gas accumulates on the valve components and causes the valve components to stick to one another or restricts movement if sufficient operating force is not available to move the valve components once the debris has stuck to the valve components.

During normal operation of diesel engines the EGR valve poppet often becomes stuck to a valve seat when the EGR valve poppet is in the closed position. This condition renders the EGR valve inoperable. This is caused by excessive build up of exhaust gas debris in the EGR valve. This typically occurs after the engine is shut down and the EGR valve is in the closed position or the EGR valve poppet is seated on the valve seat. For example, EGR systems that run with cooled exhaust tend to produce a moist vapor like

Therefore it is desirable to develop an EGR valve, wherein the EGR valve poppet is note seated on the EGR valve seat when the engine is shut down. Thus, the EGR valve design prevents the EGR poppet valve from sticking to the valve seat, thereby increasing product robustness and prolonging product life. The following paragraphs and figures describe the application and use of an EGR valve with features that locate the poppet in a resting position when the valve is not in use so that at least a portion of the poppet valve is not contacting the valve seat.

In EP 1201907 A1 there is described an exhaust gas recirculation valve for an internal combustion engine comprising a valve body carried on a valve stem and urged towards a valve seat by a spring which acts on the stem. An override catch mechanism is provided between the valve stem and a surrounding sleeve for holding the valve body in a so-called park position after the stem has been actuated to move to an override position, such as when the engine is turned off. In the park position the valve body is in an open position.

In US 2004/0069285 A1 there is described an exhaust gas recirculation valve having first and second valve members carried on a valve shaft and moveable thereby for engaging and disengaging respective valve seats. The valve shaft is moved by operation of a motor via a first gear connected to the motor shaft and a second gear rotatable with a gear shaft. The second gear has a slotted yoke portion which operates with a transverse pin fitted to the valve shaft and carrying at its ends roller bearing which engage with ramp surfaces so that operation of the motor causes axial displacement of the valve shaft and hence valve members. A torsion spring surrounds the gear shaft and acts on the second gear to provide a fail-safe return to a closed position if the motor fails.

The present invention is directed to a mechanism for preventing a poppet valve in an exhaust gas recirculation (EGR) valve assembly in a motor vehicle from sticking to a valve seat resulting in the EGR valve body inoperable. The EGR valve assembly includes an EGR valve body having an inlet port and an outlet port with the valve body defining a pass through for fluid flow between the inlet port and the outlet port. A valve seat is disposed between the inlet port and outlet port and has an aperture positioned in the path of fluid flow. A valve stem is positioned in the valve body and has a poppet valve member disposed on the end of the valve stem. The valve stem is configured to slide axially along its longitudinal axis to bring the poppet valve in contact with the valve seat and to move the poppet valve member away from the valve seat to place the valve mechanism in a position where at least a portion of the poppet valve does not contact the valve seat. In a preferred embodiment, the poppet valve is fully disconnected from the valve seat when in the resting position. An actuator is connected to the valve stem and causes the valve stem to slide axially along its longitudinal axis. A pinion gear is connected to the actuator and is in meshed engagement with a spar gear that is mounted to the valve shaft. A drive pin and ramp assembly couples the spur gear to the valve stem so that the poppet valve changes position when the spur gear rotates. A default position arrangement is provided for placing the poppet valve in a resting position where at least a portion of the poppet valve does not contact the seat when the actuator is idle from its normal operation.

The default position arrangement can have several different forms. In a first embodiment at least one spring is provided for placing the poppet valve in a resting position, and the at least one spring acts on the poppet valve so that at least a portion of the poppet valve is position idle. The at least one spring may comprise structural a light load return spring that acts on the valve stem to hold the poppet valve at the resting position away from the valve seat when the actuator is energized and then suddenly becomes de-energized. Alternatively the spring may be a reverse full open spring that acts on the valve stem by applying torque to the spur gear in order to place the poppet valve in the resting position when the actuator is de-energized.

In a second embodiment according to the invention the default position arrangement is also configured so that an electrical current drawn by the actuator holds the poppet valve in a resting position when the actuator is idle, in the resting position at least a portion of the poppet valve bering positioned away from the valve seat.

In a third embodiment according to the invention the position arrangement includes a holding feature in the drive pin and ramp assembly so that when the actuator opens the poppet valve to a maximum position and is idle the holding feature holds the poppet valve in a resting position until the actuator applies torque to drive the poppet valve to the closed position, in the resting position at least a portion of the poppel valve being positioned away from the valve seat when the actuator is idle. Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWING

The present invention will become more fully understood from the detailed description and the accompanying drawings, wherein:
Figure 1 is a schematic diagram of a combustion engine system having an EGR valve incorporated thereon;
Figure 2 is a partial cross-section perspective side view of an EGR valve body having an actuator connected thereon;
Figure 3a is a cross-sectional side view of a sub-assembly with the stem, shield and poppet valve members in a closed position;
Figure 3b is a cross-sectional side view of the sub-assembly with the stem, shield, and poppet valve members in an open position;
Figure 4 is a cross-sectional perspective view of an EGR valve body with an actuator having a torsion spring acting thereon;
Figure 5 is a cross-sectional perspective view of an EGR valve having a reverse torsion spring;
Figure 6 is a partial cross-section view of the valve seat with the sub-assembly;
Figure 7 is an overhead perspective view of the valve body and spur gear having a default position spring; and
Figure 8 is a perspective view of the EGR valve seat having a wedge ramp feature.

### DETAILED DESCRIPTION OF THE PREFERRED EMBODIMENTS

The following description of the preferred embodiment(s) is given by way of example.

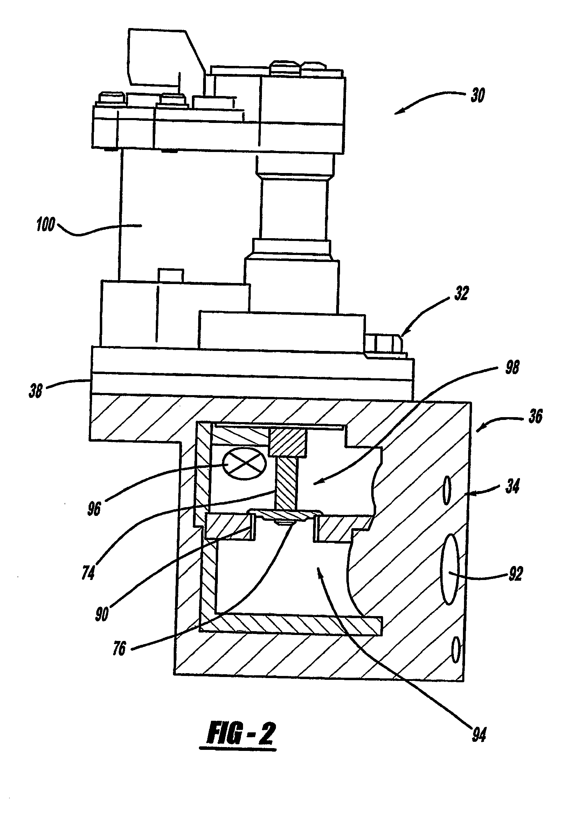

Referring to Figure 2, an exhaust gas recirculation (EGR) valve assembly is generally shown at 30. The actuator 100 is connected to a valve body assembly 36 through the use of fasteners 32; a gasket 38 is used to prevent leakage from occurring between the actuator 100 and the valve body assembly 36. Fasteners 32 are used to locate the actuator 100 and the valve body assembly 36. The EGR valve 30 is typically mounted to the engine's intake manifold by mounting bolts. The exhaust gas flows from inlet 92, into chamber 94, through valve seat 90, by poppet valve 76, into cavity 98, and to outlet 96 when poppet valve 76 is unseated from valve seat 90 and there is a sufficient pressure differential between the inlet 92 and outlet 96. In a preferred embodiment, the pressure in chamber 94 is positive. However, in an alternative embodiment, the pressure in chamber 94 is negative or fluctuates between a positive and negative pressure.

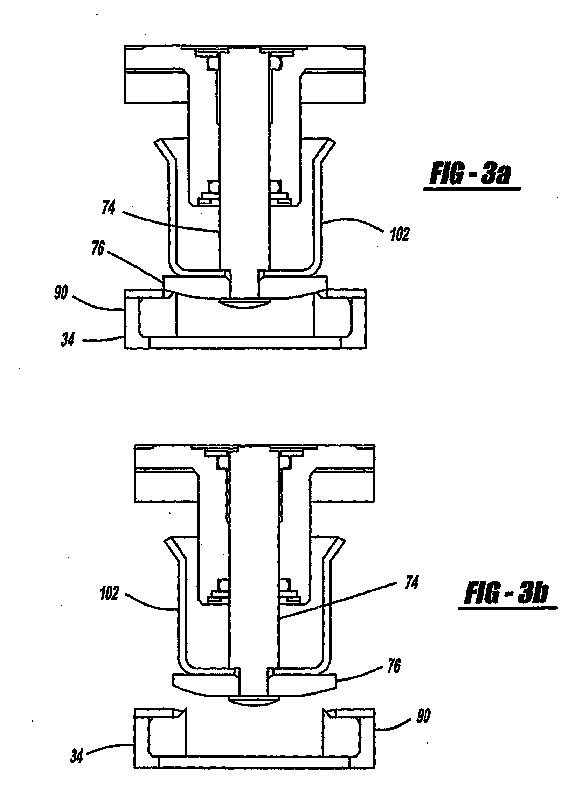

Figure 3a and 3b show the open and closed positions of the poppet valve 76. More specifically, Figure 3a shows the closed position of the poppet valve 76, and Figure 3b shows the open position of the poppet valve 76. Figures 3a and 3b also show a deflector 102 connected to poppet valve 76, which is used for deflecting away debris from the valve stem 74.

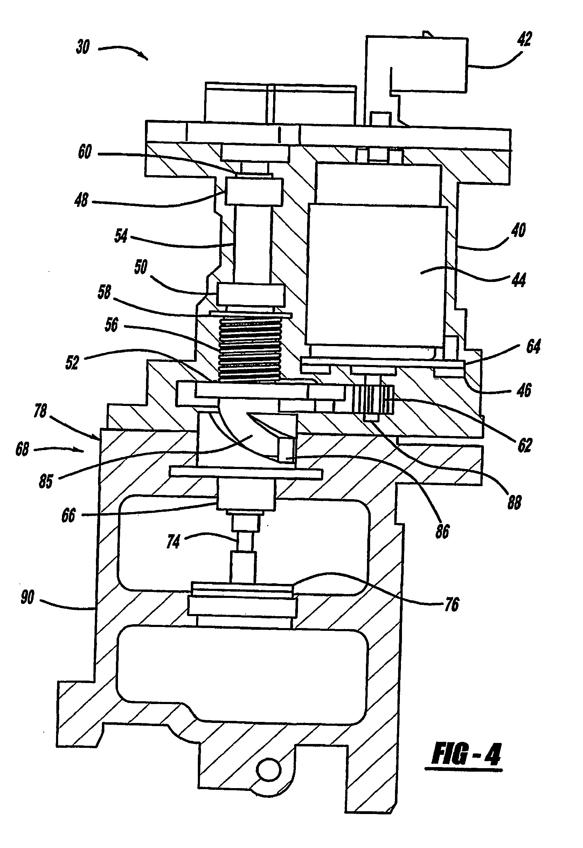

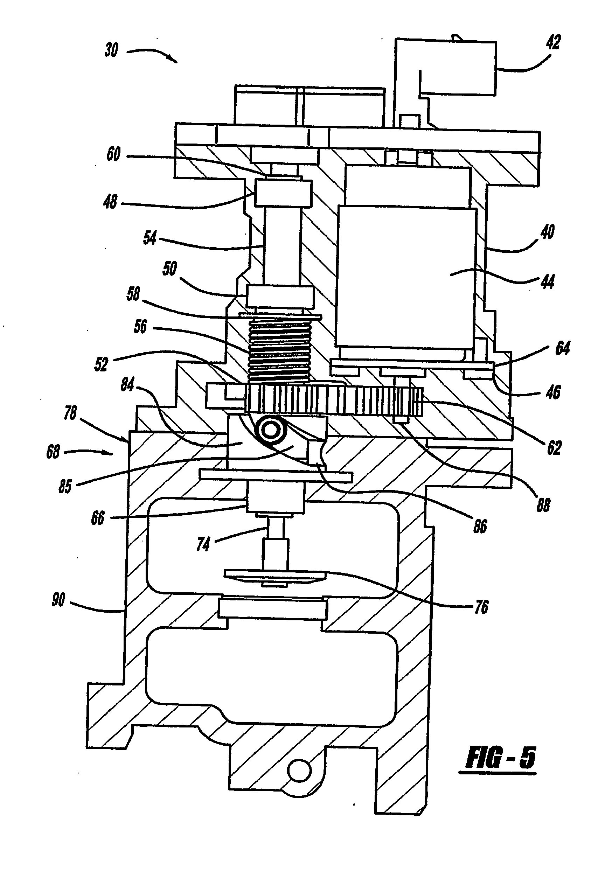

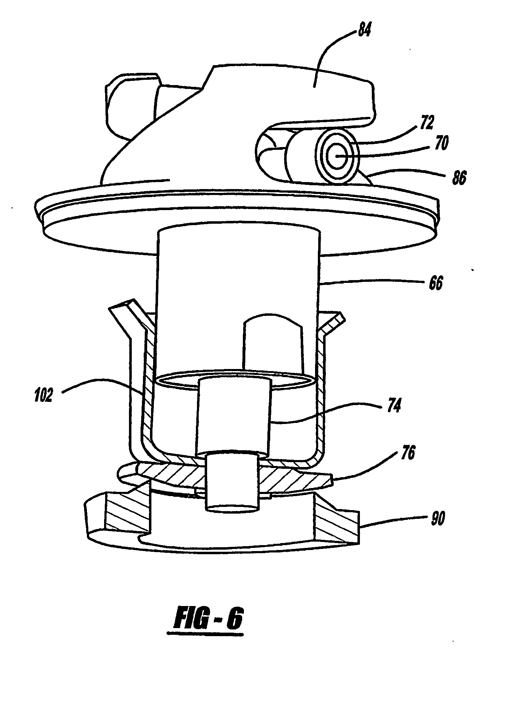

Referring to Figures 4, 5, and 6, EGR valve assembly 30 has a housing 40 designed to accept an electrical connector 42. In a preferred embodiment, a motor 44, and an integral bracket 64 are secured by screws 46 to the housing 40. The motor 44 is electrically connected to the electrical connector 42, such that the motor 44 draws electrical current when in use.

A bushing 48 and roller bearing 50 are fit into housing 40. A gear 52 is fastened to shaft 54. A torsion spring 56 and spring bushing 58 are placed over the shaft 54. The shaft 54 extends through the bearing 50 and bushing 58 and is retained by a clip 60. A gear 62, fastened to a motor shaft 88, engages gear 52. Thus, gear 52 rotates with respect to gear 62. The torsion spring 56 engages features on the housing 40 and gear 52 to provide torsional force that acts upon shaft 54.

A valve subassembly 68 consists of retainer housing 78, bearing guide 66, valve stem 74, pin 70, bearings 72, and poppet valve 76. Bearing 72 is fastened at one end of pin 70. The pin 70 is placed through an engagement hole at one end of valve stem 74. A second bearing is fastened to the opposite end of the pin (not shown). The valve stem 74 is installed by inserting it through the integral bearing section of bearing guide 66. The valve stem 74 is inserted until the bearing 72 contacts integral slotted guide ramp portion 84 of the bearing guide 66. The slotted guide ramp portion 84 has ramp surfaces 86 that contain and guide the bearing 72 when torque is applied to the pin 70 which forces the valve stem 74 to rotate about its longitudinal axis. The valve stem 74 moves in an axial direction as the bearing 72 moves along the slotted guide ramp portion 84. The slotted guide ramp portion surfaces 86 has a defined slope that causes the desired axial movement of the valve stem 74. The slotted guide ramp portion 84 is shown in more detail in Figures 4, 6, and 8. In a preferred embodiment, the slotted guide ramp portion 84 is machined into a one-piece bearing guide 66, as shown in Figure 4. In an alternate embodiment, the slotted guide ramp portion 84 is made in more than one-piece to accommodate various assembly methods. For example, the slotted guide ramp portion 84 has an upper and lower section, each having a portion of either slotted guide ramp.

In a preferred embodiment, a poppet valve 76 is installed and retained on valve stem 74 by suitable means, such as, but not limited to, swaging. In an alternative embodiment, the poppet valve 76 is keyed to the shaft in a manner that will cause the poppet valve 76 to rotate with the shaft.

Also in a preferred embodiment, the bearing guide 66 of valve sub-assembly 68 is secured in the retainer body 78 by suitable means, such as, but not limited to, swaging as shown in Figure 4. The actuator 100 and valve sub-assembly 68 are aligned by suitable locating features and are held together by fasteners (not shown). Gear 52 also has an integral fork feature 85 that engages pin 70. When the engine control unit provides a suitable control signal to the motor 44, it causes gears 62 and 52 to rotate. The integral fork feature 85 causes pin 70 to move bearing 72 along ramp 86 resulting in rotary-axial movement of the valve stem 74 and poppet valve 76. The control signal causes the motor 44 and gears 62 and 52 to rotate in either a clockwise or counter-clockwise direction, therefore, the valve stem 74 and poppet valve 76 are capable of moving in either direction.

Also, the EGR valve assembly 30 has a default position arrangement, which has several embodiments described below. The default position arrangement places the poppet valve 76 in any predetermined position besides the closed position. Preferably, when the poppet valve 76 is in the resting position the poppet valve 76 does not contact the valve seat 90. However, the resting position can be a position where the poppet valve 76 is only partially contacting the valve seat 90 when compared to the contact between the poppet valve 76 and valve seat 90 when the poppet valve 76 is in the closed position.

The first embodiment of the present invention is comprised of a lowtorque torsion spring 56, which is placed over a shaft along with the spring bushing 58. In this embodiment, the torsion spring 56 engages the housing and the gear 52 in order to provide torsion force against the shaft 54. Thus, the torsion spring 56 is configured so that after the poppet valve 76 is opened to its fully open position, and power to the motor 44 is cut off, the torsion exerted by the torsion spring 56 is not forceful enough to overcome the system friction required to bring the poppet valve 76 back into contact with the valve seat 90 or prevents the poppet valve 76 from fully contacting the valve seat 90. The poppet valve 76 being prevented from being placed in the closed position while the EGR valve assembly 30 is not in operation prevents the poppet valve 76 from sticking to valve seat 90 as the system cools, and any debris build-up in the system cools as well.

A second embodiment of the present invention comprises having the torsion spring 56 configured to bias the poppet valve 76 toward the open position. This is achieved by using a torsion spring 56 that has a winding direction opposite that of a spring that biases poppet valve 76 in the closed position. When power to the motor 44 is cut off, and no load besides the load from the torsion spring 56 is being applied to poppet valve 76, poppet valve 76 is held in an open position, until power is supplied to the motor 44. When the motor 44 is actuated, the bias force of the torsion spring 56 is overcome and the poppet valve 76 closes. This embodiment can be achieved by using a slotted guide ramp portion 86 geometry that is reversed rather than a torsion spring 56 that has a winding direction that is reversed.

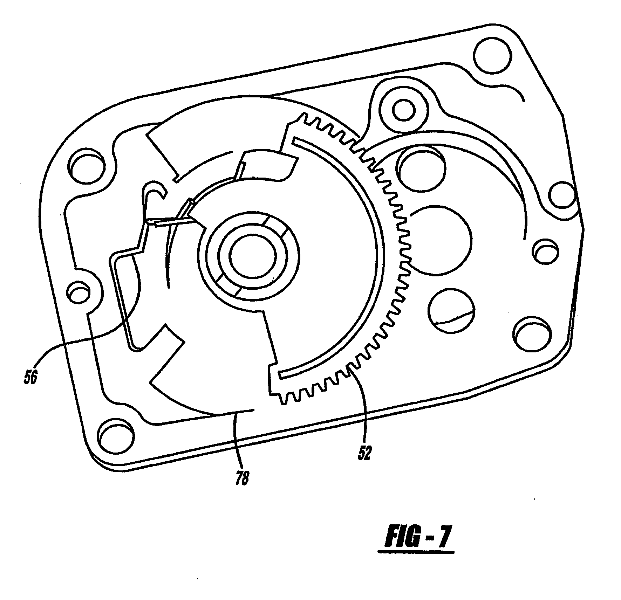

In a third embodiment of the present invention, the torsion spring 56 is configured to provide a default position for the poppet valve 76. This default, or intermediate, position of gear 52 is shown in Figure 7. The torsion spring 56 geometry and the actuator housing 40 geometry are designed such that when the motor 44 is un-powered, the poppet valve 76 is located in a default or intermediate position that is a specified distance off of the valve seat 90. This is accomplished by using a torsion spring 56 that has a sufficient amount of force to move the poppet valve 76 to the default position.

In a fourth embodiment of the present invention, the poppet valve 76 is electronically placed in the open position or in a position where at least part of the poppet valve 76 is not contacting the valve seat 90. in this embodiment, a small amount of electrical current is used to power the poppet valve 76 to an unseated position when the engine is shut down. The small amount of electrical current flows through the actuator 100 keeping the poppet valve 76 in the open position or prevents it from fully contacting the valve seat 90 for a predetermined period of time. Typically, the predetermined amount of time is a time period that is long enough for the contamination to cure or harden; thereby, preventing the "bonding" of the poppet valve 76 to the valve seat 90. No geometry or hardware changes are required for this method, but the Engine Control Module (ECM) has to be altered to provide electrical power in a shutdown mode without draining the vehicle battery.

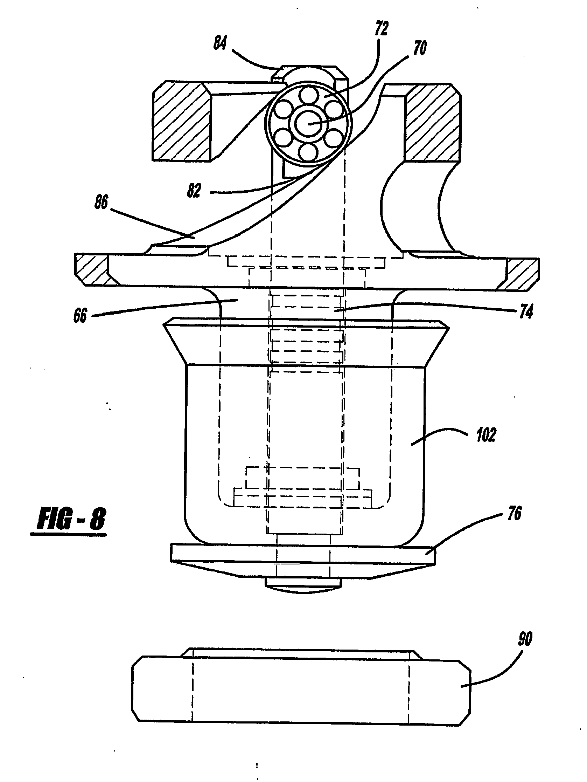

The fifth embodiment of the present invention is shown in Figure 8. In this embodiment, a holding feature 82 is added to the bearing slotted guide ramp portion 84 or cam mechanism such that the poppet valve 76 is electrically powered past the maximum allowable flow position before engine shutdown. Therefore, the poppet valve 76 remains above the holding feature 82 in a full stroke unseated position until the motor 44 direction is reversed and electrical current is applied to power the drive bearing 72 back over the holding feature 82 onto the active part of the ramps 86. Examples of the holding feature 86 are, but not limited to, a wedge, an even surface, a bump, or a detent area, where the bearing 72 contacts the holding feature 86 when moving along the slotted guide ramp member 86. Thus, a force is applied to the bearing 72 in order for bearing 72 to pass back over the holding feature 86, where the poppet valve 76 moves towards the closed position.

All five of the aforementioned embodiments keep the poppet valve 76 and valve seat 90 out of contact with each other or partially out of contact with each other while the debris is curing or hardening which would ultimately cause the poppet valve 76 to bond to the valve seat 90 making the EGR valve assembly 30 inoperable. In a preferred embodiment, the embodiments do not allow the poppet valve 76 from contacting the valve seat 90 during the curing process to ensure there is no bonding between the two parts. Alternatively, the above embodiments, allow the poppet valve 76 to partially contact the valve seat 90, which reduces the amount of surface area of the poppet valve 76 and the valve seat 90 that bond together. Thus, the bonding that does occur is overcome by the torque applied to the poppet valve 76, which is a lesser torque than needed to separate the poppet valve 76 from the valve seat 90 when the poppet valve 76 is in the closed position during the curing process.

The description of the invention is merely exemplary in nature and, thus, variations are possible without departing from the scope of the invention as defined by the following claims.

## Claims

1. A mechanism for preventing sticking in an exhaust gas recirculation valve assembly (30) for use in a motor vehicle, comprising:
a valve body (34) having an inlet port (92) and an outlet port (96);
a valve seat (90) disposed in said valve body (34), wherein said valve seat (90) defining the path of fluid flow between said inlet port (92) and said outlet port (96);
a valve stem (74) in said valve body (34), wherein said valve stem (74) moves within said valve body (34);
a poppet valve (76) connected to said valve stem (74), wherein said poppet valve (76) is configured to contact said valve seat (90) when said poppet valve (76) is in a closed position;
an actuator (100) operably connected to said valve stem (74), wherein said actuator alters the position of said poppet valve (76);
a pinion gear (62) connected to said actuator (100);
a spur gear (52) coupled to said valve stem (74) and in mesh with said pinion gear (62);
a drive pin (70) and ramp assembly (86) coupling said spur gear (52) to said valve stem (74), wherein said poppet valve (76) changes position when said spur gear (52) rotates; and
at least one spring (56) for placing said poppet valve (76) in a resting position, **characterised in that** said at least one spring (56) acts on said poppet valve (76) so that at least a portion of said poppet valve (76) is positioned away from said valve seat (90) when said actuator (100) is idle.

2. The mechanism for preventing sticking in an exhaust gas recirculation valve assembly (30) of claim 1, wherein said spring (56) is a light load return spring acting on said valve stem (74), wherein said light load return spring applies a lesser force than frictional forces in said exhaust gas recirculation valve assembly (30), thereby holding said poppet valve (76) open in said resting position.

3. The mechanism for preventing sticking in an exhaust gas recirculation valve assembly (30) of claim 1, wherein said spring (56) is a reverse full open spring that is wound in the opposite direction of a torsion spring that forces said poppet valve (76) to said closed position, such that when said actuator (100) is idle, said spring (56) opens said poppet valve (76) to said resting position.

4. The mechanism for preventing sticking in an exhaust gas recirculation valve assembly (30) of claim 1, wherein said spring (56) is a torsion spring operably connected to said poppet valve (76) and said torsion spring places said poppet valve (76) in said resting position when said actuator (100) is idle from normal operating conditions, such that said torsion spring applies a force against said poppet valve (76) so that said poppet valve (76) is directed away from said closed position and said poppet valve (76) is placed in said resting position.

5. The mechanism for preventing sticking in an exhaust gas recirculation valve assembly (30) of claim 1, wherein when said at least one spring (56) places said poppet valve (76) in said resting position, said poppet valve (76) is fully separated from said valve seat (90).

6. A mechanism for preventing sticking in an exhaust gas recirculation valve assembly (30) for use in a motor vehicle, comprising:
a valve body (34) having an inlet port (92) and an outlet port (96);
a valve seat (90) disposed in said valve body (34), wherein said valve seat (90) has an aperture positioned in the path of fluid flow between said inlet port (92) and said outlet port (96);
a valve stem (74) in said valve body (34), wherein said valve stem (74) moves within said valve body (34);
a poppet valve (76) connected to said valve stem (74), wherein said poppet valve (76) is configured to contact said valve seat (90) when said poppet valve (76) is in a closed position;
an actuator (100) connected to said valve stem (74), wherein said actuator (100) alters the position of said poppet valve (76);
a pinion gear (62) connected to said actuator (100);
a spur gear (52) coupled to said valve stem (74) and in mesh with said pinion gear (62); and
a drive pin (70) and ramp assembly (86) coupling said spur gear (52) to said valve stem (74), wherein said poppet valve (76) changes position when said spur gear (52) rotates;
**characterised in that** a holding feature is provided in said drive pin (70) and a ramp assembly (86) so that when said actuator (100) opens said poppet valve (76) to its maximum position and is idle, said holding feature holds said poppet valve (76) in a resting position until said actuator (100) applies torque to drive said poppet valve (76) to said closed position, wherein when said poppet valve (76) is in said resting positioned at least a portion of said poppet valve (76) is positioned away from said valve seat (90) when said actuator (100) is idle.

7. The mechanism for preventing sticking in an exhaust gas recirculation valve assembly (30) of claim 6, wherein when said poppet valve (76) is in said resting position, said poppet valve (76) is fully separated from said valve seat (90).

8. A mechanism for preventing sticking in an exhaust gas recirculation valve assembly (30) for use in a motor vehicle, comprising:
a valve body (34) having an inlet port (92) and an outlet port (96);
a valve seat (90) disposed in said valve body (34), wherein said valve seat (90) has an aperture positioned in the path of fluid flow between said inlet port (92) and said outlet port (96);
a valve stem (74) in said valve body (34), wherein said valve stem (74) moves within said valve body (34);
a poppet valve (76) connected to said valve stem (74), wherein said poppet valve (76) is configured to contact said valve seat (90) when said poppet valve (76) is in a closed position;
an actuator (100) connected to said valve stem (74), wherein said actuator (100) alters the position of said poppet valve (76);
a pinion gear (62) connected to said actuator (100);
a spur gear (52) coupled to said valve stem (74) and in mesh with said pinion gear (62); and
a drive pin (70) and ramp assembly (86) coupling said spur gear (52) to said valve stem (74), wherein said poppet valve (76) changes positions when said spur gear (52) rotates;
**characterised in that** an electrical current is drawn by said actuator (100) so that said actuator holds said poppet valve (76) in a resting position when said actuator (100) is idle, wherein said resting position is where at least a portion of said poppet valve (76) is positioned away from said valve seat (90) when said actuator (100) is idle.

9. The mechanism for preventing sticking in an exhaust gas recirculation valve assembly (30) of claim 8, wherein said electrical current drawn by said actuator (100) is a small electrical current in order to prevent said actuator (100) from draining a battery from a vehicle electrical system.

10. The mechanism for preventing sticking in an exhaust gas recirculation valve assembly (30) of claim 8, wherein when said default position arrangement places said poppet valve (76) in said resting position, said poppet valve (76) is fully separated from said valve seat (90).

## Patentansprüche

1. Mechanismus zum Verhindern des Anklebens in einer Abgasrückführventilanordnung (30) für die Verwendung in einem Kraftfahrzeug, umfassend:
einen Ventilkörper (34) mit einer Einlassöffnung (92) und einer Auslassöffnung (96);
einen Ventilsitz (90), der in dem Ventilkörper (34) angeordnet ist, wobei der Ventilsitz (90) den Fluidströmungsweg zwischen der Einlassöffnung (92) und der Auslassöffnung (96) definiert;
einen Ventilschaft (74) in dem Ventilkörper (34), wobei sich der Ventilschaft (74) innerhalb des Ventilkörpers (34) bewegt;
ein Tellerventil (76), das mit dem Ventilschaft (74) verbunden ist, wobei das Tellerventil (76) zum Berühren des Ventilsitzes (90) konfiguriert ist, wenn sich das Tellerventil (76) in einer geschlossenen Position befindet;
einen Aktor (100), der betriebswirksam mit dem Ventilschaft (74) verbunden ist, wobei der Aktor die Position des Tellerventils (76) verändert;
ein Ritzelrad (62), das mit dem Aktor (100) verbunden ist;
ein Stirnrad (52), das mit dem Ventilschaft (74) gekoppelt ist und mit dem Ritzelrad (62) in Eingriff steht;
ein Antriebskolben (70) und eine Rampenanordnung (86), die das Stirnrad (52) mit dem Ventilschaft (74) koppelt, wobei das Tellerventil (76) die Position ändert, wenn sich das Stirnrad (52) dreht; und
mindestens eine Feder (56) zum Anordnen des Tellerventils (76) in einer Ruhelage, **dadurch gekennzeichnet, dass** die mindestens eine Feder (56) auf das Tellerventil (76) einwirkt, sodass mindestens ein Abschnitt des Tellerventils (76) weg von dem Ventilsitz (90) angeordnet ist, wenn sich der Aktor (100) in Ruhelage befindet.

2. Mechanismus zum Verhindern des Anklebens in einer Abgasrückführventilanordnung (30) nach Anspruch 1, wobei die Feder (56) eine Rückstellfeder mit geringer Last ist, die auf den Ventilschaft (74) einwirkt, wobei die Rückstellfeder mit geringer Last eine geringere Kraft als die Reibungskräfte in der Abgasrückführventilanordnung (30) ausübt, wodurch das Tellerventil (76) geöffnet in Ruhelage gehalten wird.

3. Mechanismus zum Verhindern des Anklebens in einer Abgasrückführventilanordnung (30) nach Anspruch 1, wobei die Feder (56) eine umgekehrte, vollständig aufspringende Feder ist, die in die Gegenrichtung einer Torsionsfeder gewickelt ist und das Tellerventil (76) in die geschlossene Position bringt, sodass sich der Aktor (100) in Ruhelage befindet, wobei die Feder (56) das Tellerventil (76) zu der Ruhelage öffnet.

4. Mechanismus zum Verhindern des Anklebens in einer Abgasrückführventilanordnung (30) nach Anspruch 1, wobei die Feder (56) eine Torsionsfeder ist, die betriebswirksam mit dem Tellerventil (76) verbunden ist, und wobei die Torsionsfeder das Tellerventil (76) in die Ruhelage bringt, wenn sich der Aktor (100) im Vergleich zu normalen Betriebsbedingungen in Ruhelage befindet, sodass die Torsionsfeder eine Kraft gegen das Tellerventil (76) ausübt, sodass das Tellerventil (76) weg von der geschlossenen Position geleitet wird und das Tellerventil (76) in die Ruhelage gesetzt wird.

5. Mechanismus zum Verhindern des Anklebens in einer Abgasrückführventilanordnung (30) nach Anspruch 1, wobei, wenn die mindestens eine Feder (56) das Tellerventil (76) in die Ruhelage setzt, das Tellerventil (76) vollständig von dem Ventilsitz (90) getrennt ist.

6. Mechanismus zum Verhindern des Anklebens in einer Abgasrückführventilanordnung (30) für die Verwendung in einem Kraftfahrzeug, umfassend:
einen Ventilkörper (34) mit einer Einlassöffnung (92) und einer Auslassöffnung (96);
einen Ventilsitz (90), der in dem Ventilkörper (34) angeordnet ist, wobei der Ventilsitz (90) eine Öffnung aufweist, die in dem Fluidströmungsweg zwischen der Einlassöffnung (92) und der Auslassöffnung (96) angeordnet ist;
einen Ventilschaft (74) in dem Ventilkörper (34), wobei der Ventilschaft (74) sich innerhalb des Ventilkörpers (34) bewegt;
ein Tellerventil (76), das mit dem Ventilschaft (74) verbunden ist, wobei das Tellerventil (76) zum Berühren des Ventilsitzes (90) konfiguriert ist, wenn sich das Tellerventil (76) in einer geschlossenen Position befindet;
einen Aktor (100), der betriebswirksam mit dem Ventilschaft (74) verbunden ist, wobei der Aktor (100) die Position des Tellerventils (76) verändert;
ein Ritzelrad (62), das mit dem Aktor (100) verbunden ist;
ein Stirnrad (52), das mit dem Ventilschaft (74) gekoppelt ist und mit dem Ritzelrad (62) in Eingriff steht;
einen Antriebskolben (70) und eine Rampenanordnung (86), die das Stirnrad (52) mit dem Ventilschaft (74) koppelt, wobei das Tellerventil (76) die Position ändert, wenn sich das Stirnrad (52) dreht;
**dadurch gekennzeichnet, dass** eine Haltefunktion in dem Antriebskolben (70) und einer Rampenanordnung (86) bereitgestellt ist, sodass, wenn der Aktor (100) das Tellerventil (76) zur maximalen Position öffnet und sich in Ruhelage befindet, die Haltefunktion das Tellerventil (76) in einer Ruhelage hält, bis der Aktor (100) ein Drehmoment zum Antreiben des Tellerventils (76) in die geschlossene Position aufbringt, wobei, wenn das Tellerventil (76) sich in der Ruhelage befindet, mindestens ein Abschnitt des Tellerventils (76) weg von dem Ventilsitz (90) angeordnet ist, wenn sich der Aktor (100) in Ruhelage befindet.

7. Mechanismus zum Verhindern des Anklebens in einer Abgasrückführventilanordnung (30) nach Anspruch 6, wobei, wenn sich das Tellerventil (76) in der Ruhelage befindet, das Tellerventil (76) vollständig von dem Ventilsitz (90) getrennt ist.

8. Mechanismus zum Verhindern des Anklebens in einer Abgasrückführventilanordnung (30) für die Verwendung in einem Kraftfahrzeug, umfassend:
einen Ventilkörper (34) mit einer Einlassöffnung (92) und einer Auslassöffnung (96);
einen Ventilsitz (90), der in dem Ventilkörper (34) angeordnet ist, wobei der Ventilsitz (90) eine Öffnung aufweist, die in dem Fluidströmungsweg zwischen der Einlassöffnung (92) und der Auslassöffnung (96) angeordnet ist;
einen Ventilschaft (74) in dem Ventilkörper (34), wobei der Ventilschaft (74) sich innerhalb des Ventilkörpers (34) bewegt;
ein Tellerventil (76), das mit dem Ventilschaft (74) verbunden ist, wobei das Tellerventil (76) zum Berühren des Ventilsitzes (90) konfiguriert ist, wenn sich das Tellerventil (76) in einer geschlossenen Position befindet;
einen Aktor (100), der betriebswirksam mit dem Ventilschaft (74) verbunden ist, wobei der Aktor (100) die Position des Tellerventils (76) verändert;
ein Ritzelrad (62), das mit dem Aktor (100) verbunden ist;
ein Stirnrad (52), das mit dem Ventilschaft (74) gekoppelt ist und mit dem Ritzelrad (62) in Eingriff steht;
einen Antriebskolben (70) und eine Rampenanordnung (86), die das Stirnrad (52) mit dem Ventilschaft (74) koppelt, wobei das Tellerventil (76) Positionen ändert, wenn sich das Stirnrad (52) dreht;
**dadurch gekennzeichnet, dass** ein elektrischer Strom von dem Aktor (100) bezogen wird, sodass der Aktor das Tellerventil (76) in einer Ruhelage hält, wenn sich der Aktor (100) in Ruhelage befindet, wobei die Ruhelage dort ist, wo mindestens ein Abschnitt des Tellerventils (76) weg von dem Ventilsitz (90) angeordnet ist, wenn sich der Aktor (100) in Ruhelage befindet.

9. Mechanismus zum Verhindern des Anklebens in einer Abgasrückführventilanordnung (30) nach Anspruch 8, wobei der Strom, der von dem Aktor (100) bezogen wird, ein kleiner Strom ist, um zu verhindern, dass der Aktor (100) eine Batterie des elektrischen Fahrzeugsystems entleert.

10. Mechanismus zum Verhindern des Anklebens in einer Abgasrückführventilanordnung (30) nach Anspruch 8, wobei, wenn die Standardpositionsanordnung das Tellerventil (76) in die Ruhelage setzt, das Tellerventil (76) vollständig von dem Ventilsitz (90) getrennt ist.

## Revendications

1. Mécanisme permettant d'empêcher l'adhérence dans un ensemble de soupape de recirculation de gaz d'échappement (30) destiné à être utilisé dans un véhicule à moteur, comprenant :
un corps de soupape (34) ayant un orifice d'entrée (92) et un orifice de sortie (96) ;
un siège de soupape (90) disposé dans ledit corps de soupape (34), ledit siège de soupape (90) définissant le chemin d'écoulement fluidique entre ledit orifice d'entrée (92) et ledit orifice de sortie (96) ;
une tige de soupape (74) dans ledit corps de soupape (34), ladite tige de soupape (74) se déplaçant à l'intérieur dudit corps de soupape (34) ;
une soupape à champignon (76) connectée à ladite tige de soupape (74), ladite soupape à champignon (76) étant configurée pour venir en contact avec ledit siège de soupape (90) lorsque ladite soupape à champignon (76) est dans une position fermée ;
un actionneur (100) connecté fonctionnellement à ladite tige de soupape (74), ledit actionneur modifiant la position de ladite soupape à champignon (76) ;
un engrenage à pignon (62) connecté audit actionneur (100) ;
un engrenage droit (52) accouplé à ladite tige de soupape (74) et s'engrenant avec ledit engrenage à pignon (62) ;
un ensemble (86) de goupille d'entraînement (70) et de rampe accouplant ledit engrenage droit (52) à ladite tige de soupape (74), ladite soupape à champignon (76) changeant de position lorsque ledit engrenage droit (52) tourne ; et
au moins un ressort (56) destiné à placer ladite soupape à champignon (76) dans une position de repos, **caractérisé en ce que** ledit au moins un ressort (56) agit sur ladite soupape à champignon (76) de telle sorte qu'au moins une portion de ladite soupape à champignon (76) soit positionnée à l'écart dudit siège de soupape (90) lorsque ledit actionneur (100) est en attente.

2. Mécanisme permettant d'empêcher l'adhérence dans un ensemble de soupape de recirculation de gaz d'échappement (30) selon la revendication 1, dans lequel ledit ressort (56) est un ressort de rappel à charge légère agissant sur ladite tige de soupape (74), ledit ressort de rappel à charge légère appliquant une force inférieure à des forces de friction dans ledit ensemble de soupape de recirculation de gaz d'échappement (30), en retenant ainsi ladite soupape à champignon (76) ouverte dans ladite position de repos.

3. Mécanisme permettant d'empêcher l'adhérence dans un ensemble de soupape de recirculation de gaz d'échappement (30) selon la revendication 1, dans lequel ledit ressort (56) est un ressort inverse entièrement ouvert qui est enroulé dans le sens opposé à un ressort de torsion qui force ladite soupape à champignon (76) vers ladite position fermée, de telle sorte que lorsque ledit actionneur (100) est en attente, ledit ressort (56) ouvre ladite soupape à champignon (76) jusque dans ladite position de repos.

4. Mécanisme permettant d'empêcher l'adhérence dans un ensemble de soupape de recirculation de gaz d'échappement (30) selon la revendication 1, dans lequel ledit ressort (56) est un ressort de torsion connecté de manière fonctionnelle à ladite soupape à champignon (76) et ledit ressort de torsion place ladite soupape à champignon (76) dans ladite position de repos lorsque ledit actionneur (100) est en attente par rapport à des conditions de fonctionnement normales, de telle sorte que ledit ressort de torsion applique une force contre ladite soupape à champignon (76) de telle sorte que ladite soupape à champignon (76) soit orientée à l'écart de ladite position fermée et que ladite soupape à champignon (76) soit placée dans ladite position de repos.

5. Mécanisme permettant d'empêcher l'adhérence dans un ensemble de soupape de recirculation de gaz d'échappement (30) selon la revendication 1, dans lequel, lorsque ledit au moins un ressort (56) place ladite soupape à champignon (76) dans ladite position de repos, ladite soupape à champignon (76) est entièrement séparée dudit siège de soupape (90).

6. Mécanisme permettant d'empêcher l'adhérence dans un ensemble de soupape de recirculation de gaz d'échappement (30) destiné à être utilisé dans un véhicule à moteur, comprenant :
un corps de soupape (34) ayant un orifice d'entrée (92) et un orifice de sortie (96) ;
un siège de soupape (90) disposé dans ledit corps de soupape (34), ledit siège de soupape (90) ayant une ouverture positionnée dans le chemin d'écoulement fluidique entre ledit orifice d'entrée (92) et ledit orifice de sortie (96) ;
une tige de soupape (74) dans ledit corps de soupape (34), ladite tige de soupape (74) se déplaçant à l'intérieur dudit corps de soupape (34) ;
une soupape à champignon (76) connectée à ladite tige de soupape (74), ladite soupape à champignon (76) étant configurée pour venir en contact avec ledit siège de soupape (90) lorsque ladite soupape à champignon (76) est dans une position fermée ;
un actionneur (100) connecté à ladite tige de soupape (74), ledit actionneur (100) modifiant la position de ladite soupape à champignon (76) ;
un engrenage à pignon (62) connecté audit actionneur (100) ;
un engrenage droit (52) accouplé à ladite tige de soupape (74) et s'engrenant avec ledit engrenage à pignon (62) ; et
un ensemble (86) de goupille d'entraînement (70) et de rampe accouplant ledit engrenage droit (52) à ladite tige de soupape (74), ladite soupape à champignon (76) changeant de position lorsque ledit engrenage droit (52) tourne ;
**caractérisé en ce qu'**un élément de retenue est prévu dans ledit ensemble (86) de goupille d'entraînement (70) et de rampe de telle sorte que lorsque ledit actionneur (100) ouvre ladite soupape à champignon (76) jusqu'à sa position maximale et qu'il est en attente, ledit élément de retenue retienne ladite soupape à champignon (76) dans une position de repos jusqu'à ce que ledit actionneur (100) applique un couple pour entraîner ladite soupape à champignon (76) dans ladite position fermée,
où, lorsque ladite soupape à champignon (76) est dans ladite position de repos, au moins une portion de ladite soupape à champignon (76) est positionnée à l'écart dudit siège de soupape (90) lorsque ledit actionneur (100) est en attente.

7. Mécanisme permettant d'empêcher l'adhérence dans un ensemble de soupape de recirculation de gaz d'échappement (30) selon la revendication 6, dans lequel, lorsque ladite soupape à champignon (76) est dans ladite position de repos, ladite soupape à champignon (76) est entièrement séparée dudit siège de soupape (90).

8. Mécanisme permettant d'empêcher l'adhérence dans un ensemble de soupape de recirculation de gaz d'échappement (30) destiné à être utilisé dans un véhicule à moteur, comprenant :
un corps de soupape (34) ayant un orifice d'entrée (92) et un orifice de sortie (96) ;
un siège de soupape (90) disposé dans ledit corps de soupape (34), ledit siège de soupape (90) ayant une ouverture positionnée dans le chemin d'écoulement fluidique entre ledit orifice d'entrée (92) et ledit orifice de sortie (96) ;
une tige de soupape (74) dans ledit corps de soupape (34), ladite tige de soupape (74) se déplaçant à l'intérieur dudit corps de soupape (34) ;
une soupape à champignon (76) connectée à ladite tige de soupape (74), ladite soupape à champignon (76) étant configurée pour venir en contact avec ledit siège de soupape (90) lorsque ladite soupape à champignon (76) est dans une position fermée ;
un actionneur (100) connecté à ladite tige de soupape (74), ledit actionneur (100) modifiant la position de ladite soupape à champignon (76) ;
un engrenage à pignon (62) connecté audit actionneur (100) ;
un engrenage droit (52) accouplé à ladite tige de soupape (74) et s'engrenant avec ledit engrenage à pignon (62) ; et
un ensemble (86) de goupille d'entraînement (70) et de rampe accouplant ledit engrenage droit (52) à ladite tige de soupape (74), ladite soupape à champignon (76) changeant de position lorsque ledit engrenage droit (52) tourne ;
**caractérisé en ce qu'**un courant électrique est prélevé par ledit actionneur (100) de telle sorte que ledit actionneur retienne ladite soupape à champignon (76) dans une position de repos lorsque ledit actionneur (100) est en attente, ladite position de repos étant là où au moins une portion de ladite soupape à champignon (76) est positionnée à l'écart dudit siège de soupape (90) lorsque ledit actionneur (100) est en attente.

9. Mécanisme permettant d'empêcher l'adhérence dans un ensemble de soupape de recirculation de gaz d'échappement (30) selon la revendication 8, dans lequel ledit courant électrique prélevé par ledit actionneur (100) est un petit courant électrique afin d'empêcher que ledit actionneur (100) ne draine une batterie d'un système électrique d'un véhicule.

10. Mécanisme permettant d'empêcher l'adhérence dans un ensemble de soupape de recirculation de gaz d'échappement (30) selon la revendication 8, dans lequel lorsque ledit agencement de position par défaut place ladite soupape à champignon (76) dans ladite position de repos, ladite soupape à champignon (76) est entièrement séparée dudit siège de soupape (90).
